# EUROPEAN PATENT SPECIFICATION

(11) **EP 1 484 897 B1**
(45) Date of publication and mention of the grant of the patent: **10.01.2007**
(21) Application number: 04253369.5
(22) Date of filing: 04.06.2004
(51) Int. Cl.: H04L 29/06, H04L 29/08, H04L 12/56

(54) **Method and apparatus for transmitting and receiving multi-protocol data frames**
Verfahren und Vorrichtung für Senden und Empfangen von Multiprotokolldatenrahmen
Procédé et dispositif pour l'émission et la réception de trames de données multiprotocoles

(30) Priority: 04.06.2003 KR 2003035992
(43) Date of publication of application: 08.12.2004
(73) Proprietor: SAMSUNG ELECTRONICS CO., LTD., Suwon-si, Gyeonggi-do (KR)
(72) Inventor: An, Cheol-hong, No. 248-806 Ssangyong Apt., Suwon-si, Gyeonggi-do (KR)
(74) Representative: Robinson, Ian Michael

(56) References cited:
- WO-A-02/05492
- WO-A-02/06986
- US-A1- 2003 063 619
- BARR JOHN: "Device & Connection Management" 22 October 2002 (2002-10-22), MOTOROLA , THE WIMEDIA ALLIANCE , XP002293977 Overview Initial Requirements Frame Convergence Sublayer Stream Index Mapping Personal Area Networking

## Description

The present invention relates to a method and an apparatus for transmitting and receiving data frames in various protocols.

With the development of digital technology, we have been able to enjoy a large number of digital products easily in our daily lives, thereby making our lives more convenient. A variety of digital products such as DVD players, cable set-top boxes (STBs), digital video cassette recorders (DVCRs), digital TV (DTV) sets and personal computers are currently available and others are under development. These digital products may be individually used or connected with one another on a single network. Such a network is called a personal area network (PAN). A related art PAN has been generally implemented as a wired network using cables. However, as wireless communication technology advances, wireless PAN is becoming increasingly common. For communications in the wireless PAN, all devices in a piconet defined by IEEE 802.15.3 can gain access to a wireless medium (WM) depending on information provided by a piconet coordinator (hereinafter, referred to as a "PNC"). This information is broadcast through a beacon. One piconet is determined according to a piconet ID (PNID) and a beacon source ID (BSID) that are defined by the PNC. To one piconet may be connected a variety of different devices employing various protocols and different transfer modes such as IEEE 1394, USB and IEEE 802 families.

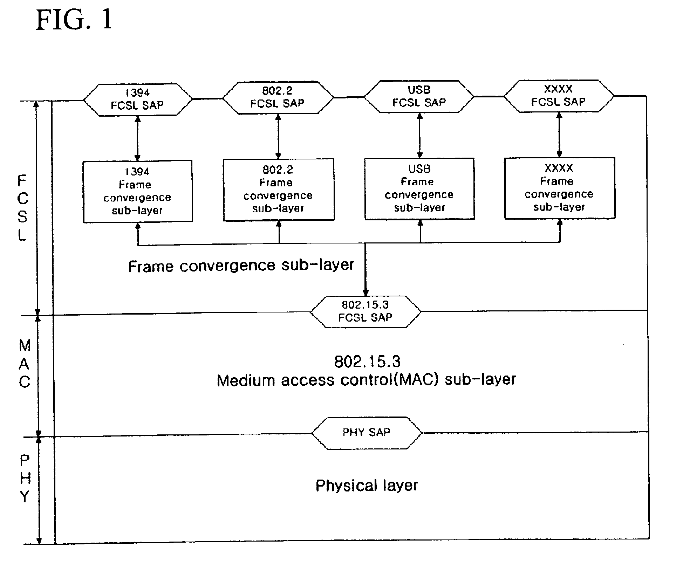

Figure 1 is a block diagram illustrating a frame convergence sub-layer model of the related art in which a variety of protocols are used.

The open systems interconnection (OSI) 7 layer model has a physical layer serving as the lowest layer and a data link layer above the physical layer. The data link layer comprises two sub-layers: a medium access control (MAC) sub-layer and a frame convergence sub-layer (FCSL). Service access points (SAPs) serving as an interface for linking the adjacent layers are present between the layers. As the interface in Figure 1, there are a PHY SAP between the physical layer and the MAC layer and a FCSL SAP between the MAC layer and the FCSL. Also in Figure 1, there are shown several FCSLs for use in a variety of protocols, e.g. IEEE 1394, IEEE 802.2, USB, and other protocols (hereinafter, referred to as "XXXX protocols"). Between the FCSLs for use in the respective protocols and the applications using the relevant protocols are the FCSL SAPs serving as interfaces, e.g. 1394 SAP for an IEEE 1394 application, 802.2 SAP for an IEEE 802.2 application, USB SAP for an USB application, and XXXX SAPs for other XXXX applications.

Each of the FCSLs receives packets (including a protocol data unit; hereinafter referred to as "PDU") from an upper protocol layer through the relevant FCSL SAP, classifies the PDU according to classification rule sets, and transfers the classified PDU to the MAC SAP. Further, the FCSL receives the PDU from the MAC SAP and then transfers the received PDU to its upper layer through the relevant FCSL SAP. for example this is disclosed in the presentation device & connection management; John Barr, october 22, 2002.

As discussed above, however, there are no currently available methods for determining which sub-layer is used to transfer and receive data transferred and received through the MAC SAP when there are several FCSLs for a variety of different protocols. Therefore, it is necessary to specifically define and provide a method by which a variety of different FCSLs can be simultaneously supported.

According to the present invention there is provided an apparatus and method as set forth in the appended claims. Preferred features of the invention will be apparent from the dependent claims, and the description which follows.

The present invention provides a FCSL logic link control serving as a service access point of data transferred or received through a MAC SAP when several FCSLs for supporting a variety of different protocols exist on a MAC layer.

According to the present invention in a first aspect, there is provided a method for transmitting multi-protocol data frames through a predetermined MAC (medium access control), comprising: (a) receiving data frames transmitted from an upper protocol frame convergence sub-layer(FCSL);(b) providing the received data frames with identification information on the upper protocol FCSL having transmitted the data frame; and (c) transmitting the data frames including identification information.

According to the present invention in a second aspect, there is provided an apparatus for transmitting multi-protocol data frames, comprising: a plurality of frame convergence sub-layer (FCSL) modules supporting different protocols; a FCSL logic link control (LLC) module configured to receive data frames from at least one module among the FCSL modules and to provide the data frames to identification information so as to allow a receiving apparatus to identify the FCSL having transmitted the data frames, and a medium access control (MAC) module configured to receive data frames from the FCSL LLC module and transmit the data frames to a wireless transmitting medium.

According to the present invention in a third aspect, there is provided a method for receiving multi-protocol data frames, comprising: receiving data frames; determining an upper protocol FCSL to which the received data frames are transmitted, based on identification information included in the received data frames, and transmitting the received data frames to the determined upper protocol FCSL.

According to the present invention in a fourth aspect, there is provided an apparatus for receiving multi-protocol data frames, comprising: a plurality of frame convergence sub-layer (FCSL) modules supporting the protocols; and a FCLS logic link control (LLC) module configured to receive data frames transmitted to a wireless transmitting medium through a MAC module and to determines a FCSL module to which the data frames are transmitted, based on identification information included in the data frames, and to transmit the data frames to the determined FCSL module.

Further features of the present invention are set out in the appended claims.

The above and other objects, features and advantages of the present invention will become apparent from the following description of exemplary embodiments given in conjunction with the accompanying drawings, in which:
Figure 1 is a block diagram illustrating a FCSL (frame convergence sub-layer) model in which a variety of protocols are used;
Figure 2 shows a structure of a protocol stack according to an exemplary embodiment of the present invention;
Figure 3 shows a structure of a FCSL logic link control of Figure 2;
Figure 4 illustrates an example of a CTA (channel time allocation) mapping relationship between two devices; and
Figure 5 shows a superframe structure for use in the embodiment shown in Figure 4.

Hereinafter, exemplary embodiments of the present invention will be described in detail with reference to the accompanying drawings, wherein like numerals are used to refer to like elements having the same functions.

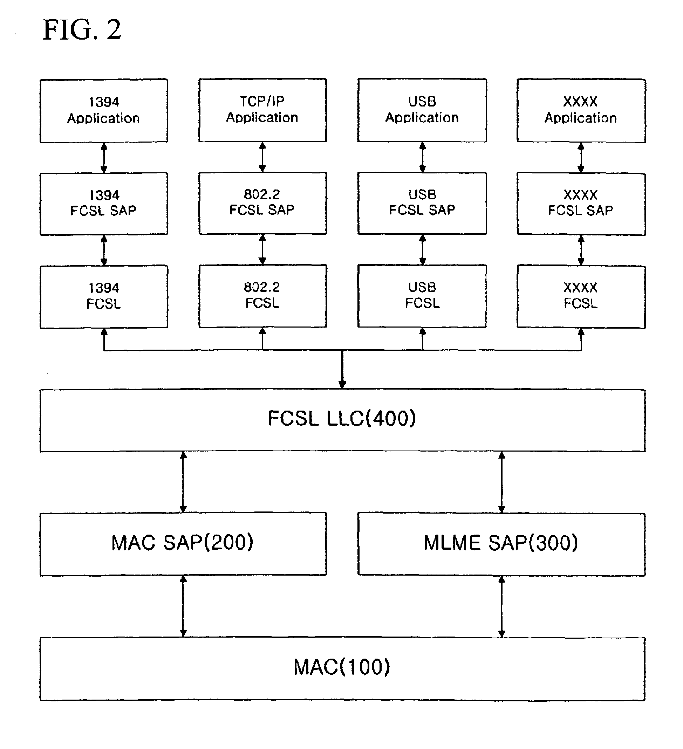

Figure 2 shows a structure of a protocol stack according to an exemplary embodiment of the present invention.

Referring to Figure 2, there is shown the protocol stack under the circumstances that applications using the IEEE 1394 protocol, TCP/IP protocol, USB protocol and other protocols (hereinafter, referred to as the "XXXX protocol") are present in an upper layer.

The protocol stack is configured in such a manner that a MAC layer 100 is located on a physical layer (not shown), a frame convergence sub-layer logic link control (FCSL LLC) 400 is located on the MAC layer 100, and a MAC SAP 200 and a MAC layer management entity (MLME) SAP 300, which serve as an interface, are interposed between the layer 100 and the FCSL LLC 400. FCSLs for a variety of different protocols may be located above the FCSL LLC 400. For example, there may be a 1394 FCSL for an IEEE 1394 packet, an 802.2 FCSL for an IEEE 802.2 packet, a USB FCSL for an USB packet, and a XXXX FCSL for other packets.

A FCSL PDU classification process is implemented to allow each FCSL PDU to be mapped into a specific stream index. Each stream index is associated with a set of quality of service (QoS) characteristics. Upon completion of classification, each FCSL PDU is delivered using QoS parameters specified for the stream index. The classification process uses one or more sets of classification parameters to analyze frames entering the respective FCSLs. For example, the classification parameters set for the 802.2 FCSL comprise classification priority, stream indexes, and protocol-specific parameters such as destination address, source address or priority parameters. For example, the 802.2 FCSL receives an 802.2 frame PDU through the 802.2 FCSL SAP, and then classifies the received PDU according to the destination address, source address and priority parameters. The received PDU is mapped into the specific stream index according to the 802.2 FCSL classification rules, and the received PDU source and destination addresses are mapped into 802.15.3 source ID (ScrID) and destination ID (DestID). Then, a valid frame is delivered to the MAC SAP 200. Furthermore, the 802.2 FCSL receives a frame from the MAC SAP 200 and transfers the received frame to the upper layer through the 802.2 FCSL SAP.

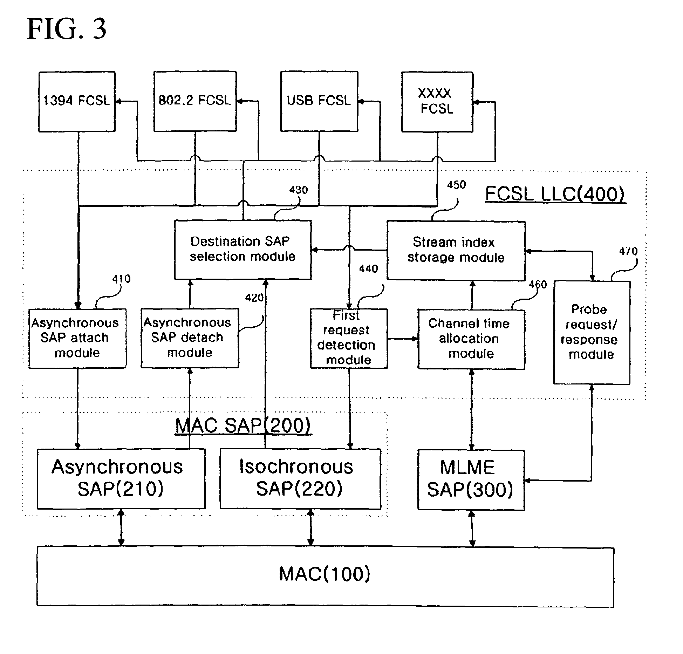

Meanwhile, when only one upper protocol such as the 802.2 protocol is used, the 802.2 FCSL may transfer and receive frames directly to and from the MAC SAP 200 as explained above. However, when another protocol, e.g. a 1394 protocol or a USB protocol, is also used together with the 802.2 protocol, it should be determined through which FCSL the frames pass. Therefore, the present invention is configured to implement a new layer, i.e. the FCSL LLC 400, between the specific FCSL and the MAC SAP 200 so that it can be determined which one of various different protocols is used. The structure of the FCSL LLC 400 will be described in detail with reference to Figure 3.

The MAC layer 100 is located between the physical layer (not shown) and the MAC SAP 200. The MAC layer 100 refers to beacon information received from a PNC so that the frames from the upper layer are transferred to a wireless medium through the physical layer at an appropriate time. Meanwhile, there is also another interface, i.e. the MLME SAP 300, between the FCSL LLC 400 and the MAC layer 100, in addition to the MAC SAP 200. The MLME SAP 300 is a SAP used for a MLME (not shown). The MLME is used, for example, to reset the MAC layer, perform scanning to determine whether there is any piconet associated with the communication channels, create a new piconet, perform synchronization for a preliminary step for devices associated with a specific piconet, associate devices with a piconet, and/or support a handover mechanism between piconets.

Figure 3 more specifically illustrates the structure of the FCSL LLC shown in Figure 2.

The IEEE 802.15.3 MAC supports two kinds of data, i.e. asynchronous data and isochronous data. Referring to Figure 3, the MAC SAP 200 comprises SAPs for use in the two kinds of data supported by IEEE 802.15.3, i.e. an asynchronous SAP 210 for asynchronous data and an isochronous SAP 220 for isochronous data.

The MLME SAP 300 is a SAP for the MLME and provides a variety of services for managing the MAC layer 100.

The FCSL LLC 400 for allowing a variety of different protocols to be used comprises an asynchronous SAP attach module 410, an asynchronous SAP detach module 420, a destination SAP selection module 430, a first request detection module 440, a channel time allocation module 460, a probe request/response module 470, and a stream index storage module 450.

The asynchronous SAP attach module 410 attaches to a frame an SAP for indicating which specific FCSL the frame is received from, and then delivers the resultant frame to the asynchronous SAP 210. Further, the asynchronous SAP detach module 420 separates the SAP from the frame received from the asynchronous SAP 210 and then delivers the separated SAP to the destination SAP selection module 430. The destination SAP selection module 430 determines which FCSL has forwarded the frame based on the SAP separated from the detach module 420, and then sends the frame to the determined FCSL.

The first request detection module 440 requests channel time allocation (CTA) from the channel time allocation module 460 when receiving an isochronous data transfer request from the specific FCSL. The channel time allocation module 460 is allocated a channel through the MLME SAP 300 from the PNC (not shown). This means receiving a valid stream index. The received stream index, a destination SAP thereof and a device ID are stored in the stream index storage module 450. The destination SAP has a different value for each FCSL. When the CTA is made, the PNC broadcasts CTA information to all devices through a beacon. Meanwhile, a destination device receives the beacon and sends a probe request to a source device through the probe request/response module 470. At this time, in an exemplary embodiment, the requested information element (IE) may be one such as a piconet service IE or a vendor specific IE which is not defined by the IEEE 802.15.3 standards. In response to the probe request, the probe request/response module 470 in the source device creates IE based on content stored in the stream index storage module 450 and sends a probe response to the destination device. The destination device receives the probe response and stores the IE forwarded by the source device in its own stream index storage module 450.

Meanwhile, the destination SAP selection module 430 in the destination device selects a destination FCSL by referring to the information stored in the stream index storage module 450 on the basis of the stream index and an Originator ID (OriglID) in the frame input through the isochronous SAP 220.

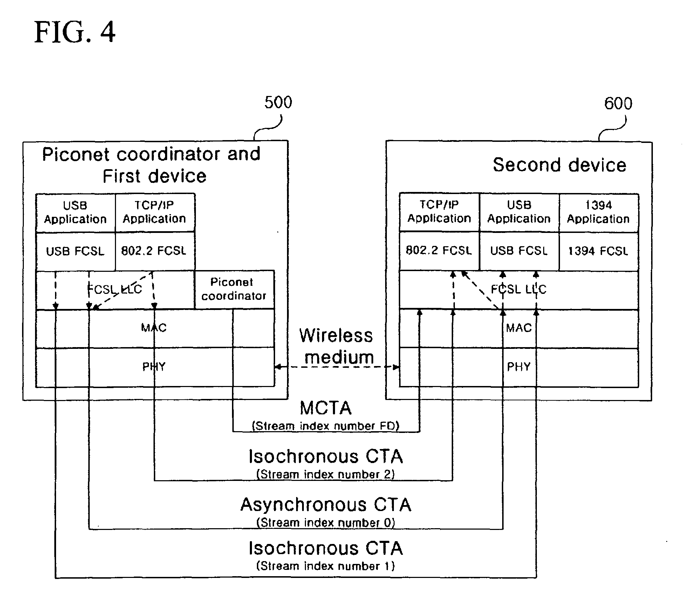

Figure 4 illustrates an example of a CTA mapping relationship between two devices.

Referring to Figure 4, a first device 500 is a source device operable to transfer data to a second device 600. The first device 500 can transfer and receive data in USB protocol and TCP/IP protocol, while the second device 600 can transfer and receive data in TCP/IP protocol, USB protocol, and 1394 protocol. The first device 500 may transfer asynchronous and isochronous data in USP protocol and TCP/IP protocol to the second device 600. Furthermore, in this embodiment, the first device 500 is implemented in such a manner as to function as a PNC, but a separate PNC may also be employed.

First, the transfer of asynchronous data will be described. It is assumed that the asynchronous data in USB protocol is transferred. In the first device 500, USB PDUs are transferred to the USB FCSL through the USB FCSL SAP (not shown). In the FCSL, the transferred PDUs are translated into a frame compatible with the IEEE 15.3 MAC layer 100. Then, the frame is delivered to the asynchronous SAP attach module 410. The asynchronous SAP attach module 410 attaches SAP information to the frame so that the second device 600 can recognize that the data are transferred through the USB FCSL, and send the frame to the asynchronous SAP 210. That is, the asynchronous SAP attach module 410 attaches an indication that the frame is transferred through the USB FCSL SAP to the relevant frame. The frame passed through the asynchronous SAP attach module 410 is delivered to the asynchronous SAP module 210 and then sent to the MAC layer 100. The frame is also transferred to the second device 600 through the wireless transfer media after passing through the MAC layer 100 and the physical layer (not shown).

In the second device 600 where the frame sent by the first device is received, the asynchronous data are transferred to the asynchronous SAP module 210 via the physical layer and the MAC layer 100. The SAP information is separated in the asynchronous SAP detach module 420. The destination SAP selection module 430 determines that the frame should be transferred to the USB FCSL based on the SAP information, and delivers the frame to the USB FCSL. Then, the frame is sent to the USB FCSL SAP (not shown) and finally to the USB application. It should be noted that the asynchronous data can be transferred with the CTA allocated by the PNC, and the asynchronous data may be alternatively transferred based on a contention access period (CAP) or some management CTA (MCTA). Meanwhile, according to the aforementioned procedures, the data in TCP/IP protocol can also be transferred together with the asynchronous data in USB protocol. In this case, since only one asynchronous CTA for the asynchronous data between two devices can be used, the USB and 802.2 PDUs share the asynchronous CTA. The index number of the asynchronous CTA always has a fixed value of "zero".

Next, the transfer of isochronous data will be described.

It is assumed that USB application data is to be transferred. First, if an isochronous data transfer request is issued from the USB FCSL in the first device 500, the first request detection module 440 determines whether this request is a first transfer request. If so, the first request detection module 440 requests the channel time allocation module 460 for CTA. The channel time allocation module 460 requests the CTA through the MLME SAP 300, and receives a valid stream index through the MLME SAP 300 when being allocated the channel time. The CTA is determined by the PNC. For example, assuming that the first device 500 receives the channel index of "1", the stream index storage module 450 stores the allocated stream index (i.e., "1"), a destination SAP value for the allocated stream index, and a device ID. The destination SAP is defined to have a unique value for each FCSL. Once the CTA is made, the PNC broadcasts the CTA information to all devices through the beacon. The second device 600, which has received the beacon, requests the first device 500 for a probe response. Then, the first device 500 creates the IE on the basis of the channel index, destination SAP value and device ID, and responds to the second device 600. The second device 600 receives the probe response from the first device 500 and stores the channel index, destination SAP value and device ID. Thereafter, the data in USB protocol are sent to the MAC layer 100, via the USB FCSL and isochronous SAP 220 in the first device 500, and then to the wireless medium.

The second device 600 receives the frame forwarded by the first device 500. The received frame is transferred to the USB application via the MAC layer 100, the isochronous SAP 200, the destination SAP selection module 430 and the USB FCSL.

Furthermore, the isochronous data in TCP/IP protocol can also be transferred in the same manner as described above. In Figure 4, however, the index number "2" is given, which is different from the stream index given to the USB application data.

In the IEEE 802.15.3 MAC layer, a value of "0xFD" is reserved for the stream index for MCTA. Further, a value of "0xFE" is reserved for an unspecified stream.

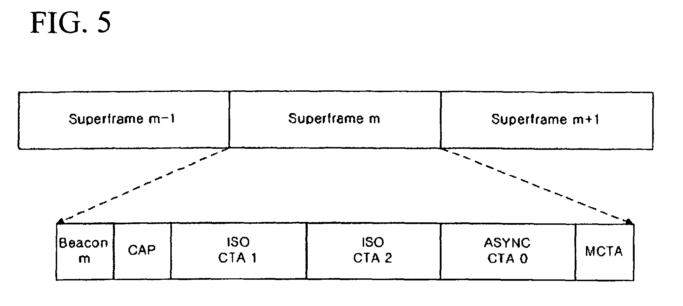

Figure 5 shows a superframe structure for use in the embodiment shown in Figure 4.

The superframe is a frame between beacons and may comprise a beacon, a contention access period (CAP), an asynchronous CTA, isochronous CTAs, and MCTA. Referring to Figure 4, the stream indexes of the asynchronous data, USB data and TCP/IP data have the values of "0", "1", and "2", respectively. Thus, the superframe has ISO CTA 1 containing USB data, ISO CTA 2 containing TCP/IP data, and ASYNC CTA 0 containing the USB and TCP/IP data.

According to the present invention so constructed, there is an advantage in that even though a variety of different FCSLs are simultaneously in operation, a specific FCSL associated with data supplied from a MAC layer can be easily located without confusion.

Although the aforementioned embodiments are shown and described based on IEEE 802.15.3, the present invention is not limited thereto and is also applicable to the other cases where frame convergence sub-layers for a plurality of protocols are present. Further, while it has been described in the embodiment that the asynchronous and isochronous data are transferred, the present invention is also not limited thereto. Data in other formats, for example, may be transferred, which is also included within the technical scope of the present invention. Furthermore, while it has been described in the embodiment that the asynchronous SAP attach module and asynchronous SAP detach module are individually and separately provided, the present invention is also not limited thereto. Both modules may be incorporated into a single module, which also falls within the technical scope of the present invention.

Although a few preferred embodiments have been shown and described, it will be appreciated by those skilled in the art that various changes and modifications might be made without departing from the scope of the invention, as defined in the appended claims.

## Claims

1. A method for transmitting multi-protocol data frames through a predetermined MAC medium access control, comprising:
(a) receiving data frames transmitted from an upper protocol frame convergence sub-layer FCSL;
(b) providing the received data frames with identification information on the upper protocol FCSL having transmitted the data frame; and
(c) transmitting the data frames including identification information.

2. The method as claimed in claim 1, wherein the data frames are transmitted in the mode of MAC based on IEEE 802.15.3 standards.

3. The method as claimed in claim 1 or 2, wherein the data frames are transferred in either mode of an asynchronous or isochronous transfer.

4. The method as claimed in claim 1, wherein the data frames are asynchronous data frames.

5. The method as claimed in claim 1, wherein:
(a) the data frames are isochronous data frames;
(b) the isochronous data frames are provided with a stream index mapped into a frame convergence sub layer FCSL; and
(c) transmitting the isochronous data frames during a channel time allocation CTA of the provided stream index.

6. The method as claimed in claim 5, wherein the stream index mapped into a FCSL having transmitted the isochronous data is obtained with the CTA from a piconet coordinator PNC.

7. The method as claimed in claim 6, further comprising sending a probe response with the stream index mapping information when having received a probe request from a receiving apparatus after receipt of the CTA.

8. An apparatus for transmitting multi-protocol data frames, comprising:
a plurality of frame convergence sub-layer FCSL modules supporting different protocols;
a FCSL logic link control LLC module (400) configured to receive data frames from at least one module among the FCSL modules and to provide the data frames to identification information so as to allow a receiving apparatus (600) to identify the FCSL having transmitted the data frames; and
a medium access control MAC module (100) configured to receive data frames from the FCSL LLC module and transmit the data frames to a wireless transmitting medium.

9. The apparatus as claimed in claim 8, wherein the MAC module is based on IEEE 802.15.3 standards.

10. The apparatus as claimed in claim 8 or 9, wherein the received data frames comprise asynchronous data frames, and the FCSL LLC module (400) comprises an asynchronous service access point SAP attach module (410) configured to provide the asynchronous data frames with identification information so as to allow the receiving apparatus (600) to identify the FCSL having transmitted the asynchronous data frames.

11. The apparatus as claimed in claim 8, 9 or 10, wherein the data frames received from the FCSL module comprise isochronous data frames, and the FCSL LLC module (400) comprises a stream index storage module (450) configured to store therein a stream index for the FCSL having transmitted the isochronous data frames, and the MAC module (100) is configured to transmit the isochronous data frames during allocation of the CTA to have the stored stream index.

12. The apparatus as claimed in claim 11, wherein the FCSL LLC module (400) further comprises a probe request/response module (470) configured to respond to a probe request from the receiving apparatus (600), with the stream index for the FCSL having transmitted the isochronous data frames, stored in the stream index storage module (450).

13. A method for receiving multi-protocol data frames, comprising:
receiving data frames;
determining an upper protocol frame convergence sub-layer, FCSL, to which the received data frames are transmitted, based on identification information included in the received data frames; and
transmitting the received data frames to the determined upper protocol FCSL.

14. The method as claimed in claim 13, wherein the received data frames comprise data frames in the MAC mode based on IEEE 802.15.3 standards.

15. The method as claimed in claim 13 or 14, wherein the received data frames are transferred in either mode of an asynchronous or isochronous transfer.

16. The method as claimed in claim 13, wherein the data frames are asynchronous data frames.

17. The method as claimed in claim 13, wherein the method for receiving multi-protocol data frames, comprises:
receiving isochronous data frames;
determining the upper protocol FCSL to which the received isochronous data frames are transmitted, to be a stream index of the received isochronous data frames; and
transmitting the received isochronous data frames to the determined upper protocol layer.

18. The method as claimed in claim 17, wherein the stream index is determined when a piconet coordinator PNC allows a CTA of a receiving apparatus.

19. The method as claimed in claim 18, further comprising sending a probe request to a transmitting apparatus (500) when it is allotted a CTA to transmit the isochronous data frames and receiving a probe response by the transmitting apparatus (500) in response to the probe request, with the stream index and the mapping information of the FCSL to which the isochronous data frames are transmitted.

20. An apparatus for receiving multi-protocol data frames, comprising:
a plurality of frame convergence sub-layer FCSL modules supporting the protocols; and
a FCLS logic link control LLC module (400) configured to receive data frames transmitted to a wireless transmitting medium through a MAC module (100) and to determine a FCSL module to which the data frames are transmitted, based on identification information included in the data frames, and to transmit the data frames to the determined FCSL module.

21. The apparatus as claimed in claim 20, wherein the MAC module is based on IEEE 802.15.3 standards.

22. The apparatus as claimed in claim 20 or 21, wherein the data frames comprise asynchronous data frames, and the FCSL LLC module (400) comprises an asynchronous service access point SAP detach module (420) configured to detach the identification information included from the asynchronous data frames so as to determine whether they correspond to the FSCL to which the asynchronous data frames are to be transmitted.

23. The apparatus as claimed in claim 20, 21 or 22, wherein the data frames comprise isochronous data frames, and the FCSL LLC module (400) comprises a stream index storage module (450) configured to store therein mapping informing between the FCSL and the stream index, the FCSL to which the isochronous data frames are to be transmitted.

24. The apparatus as claimed in any of claims 20 to 23, wherein the FCSL LLC module further comprises a probe request/response module (470) configured to allow the stream index storage module (450) receiving a probe request including mapping information between the stream index and the FCSL and to store therein the mapping information.

## Patentansprüche

1. Verfahren zum Senden von Multiprotokoll-Daten-Frarnes über eine vorgegebene Medienzugriffssteuerung (medium access control - MAC), das umfasst.
a) Empfangen von Daten-Frames, die von einer Frame-Konvergenz-Teilschicht (frame convergence sub-layer - FCSL) eines oberen Protokolls gesendet werden;
b) Versehen der empfangenen Daten-Frames mit Identifizierungsinformationen auf der FCSL des oberen Protokolls, die den Daten-Frame gesendet hat; und
c) Senden der Daten-Frames einschließlich der Identifizierungsinformationen.

2. Verfahren nach Anspruch 1, wobei die Daten-Frames in dem Medienzugriffssteuerung-Modus auf Basis von Standards nach IEEE 802.15.3 gesendet werden.

3. Verfahren nach Anspruch 1 oder 2, wobei die Daten-Frames im Modus entweder einer asynchronen oder isochronen Übertragung übertragen werden.

4. Verfahren nach Anspruch 1, wobei die Daten-Frames asynchrone Daten-Frames sind.

5. Verfahren nach Anspruch 1, wobei
a) die Daten-Frames isochrone Daten-Frames sind;
b) die isochronen Daten-Frames mit einem Stream-Index versehen werden, der in einer Frame-Konvergenz-Teilschicht (FCSL) abgebildet ist; und
c) die isochronen Daten-Frames während einer Kanalzeitzuweisung (channel time allocation - CTA) des bereitgestellten Stream-Index gesendet werden.

6. Verfahren nach Anspruch 5, wobei der Stream-Index, der in einer Frame-Konvergenz-Teilschicht abgebildet ist, die die isochronen Daten gesendet hat, mit der Kanalzeitzuweisung von einem Piconet-Koordinator (piconet coordinator - PNC) bezogen wird.

7. Verfahren nach Anspruch 6, das des Weiteren Senden einer Anforderungsantwort mit den Abbildungsinformationen des Stream-Index umfasst, wenn nach Empfang der Kanalzeitzuweisung eine Anforderungsabfrage von einer empfangenden Vorrichtung empfangen worden ist.

8. Vorrichtung zum Senden von Multiprotokoll-Daten-Frames, die umfasst:
eine Vielzahl von Frame-Konvergenz-Teilschicht (FCSL)-Modulen, die verschiedene Protokolle unterstützen;
ein FCSL-LLC (logic link control)-Modul (400), das so konfiguriert ist, dass es Daten-Frames von wenigstens einem Modul unter den FCSL-Modulen empfängt und die Daten-Frames mit ldentifizierungsinformationen versieht, so dass eine empfangende Vorrichtung (600) die Frame-Konvergenz-Teilschicht identifizieren kann, die die Daten-Frames gesendet hat; und
ein MAC-Modul (100), das so konfiguriert ist, dass es Daten-Frames von dem FCSL-LLC-Modul empfängt und die Daten-Frames zu einem Drahtlos-Sendemedium sendet.

9. Vorrichtung nach Anspruch 8, wobei das MAC-Modul auf Standards nach IEEE 802.15.3 basiert.

10. Vorrichtung nach Anspruch 8 oder 9, wobei die empfangenen Daten-Frames asynchrone Daten-Frames umfassen und das FCSL-LLC-Modul (400) ein asynchrones Dienstzugangspunkt (service access point - SAP)-Anschlussmodul (410) umfasst, das so konfiguriert ist, dass es die asynchronen Daten-Frames mit Identifzierungsinformationen versieht, so dass die empfangende Vorrichtung (600) die Frame-Konvergenz-Teilschicht identifizieren kann, die die asynchronen Daten-Frames gesendet hat.

11. Vorrichtung nach Anspruch 8, 9 oder 10, wobei die von dem FCSL-Modul empfangenen Daten-Frames isochrone Daten-Frames umfassen und das FCSL-LLC-Modul (400) ein Stream-Index-Speichermodul (450) umfasst, das so konfiguriert ist, dass es einen Stream-Index für die Frame-Konvergenz-Teilschicht darin speichert, die die isochronen Daten-Frames gesendet hat, und das MAC-Modul (100) so konfiguriert ist, dass es die isochronen Daten-Frames während Zuweisung der Kanalzeitzuweisung sendet, um über den gespeicherten Stream-Index zu verfügen.

12. Vorrichtung nach Anspruch 11, wobei das FCSL-LLC-Modul (400) des Weiteren ein Anforderungsabfrage-/Antwortmodul (470) umfasst, das so konfiguriert ist, dass es auf eine Anforderungsabfrage von der empfangenden Vorrichtung (600) antwortet, wobei der Stream-Index für die Frame-Konvergenz-Teilschicht, die die isochronen Daten-Frames gesendet hat, in dem Stream-Index-Speichermodul (450) gespeichert ist.

13. Verfahren zum Empfangen von Multiprotokoll-Daten-Frames, das umfasst:
Empfangen von Daten-Frames;
Bestimmen einer Frame-Konvergenz-Teilschicht (FCSL) eines oberen Protokolls, zu der die empfangenen Daten-Frames gesendet werden, auf Basis von Identifizierungsinformationen, die in den empfangenen Daten-Frames enthalten sind; und
Senden der empfangenen Daten-Frames zu der bestimmten Frame-Konvergenz-Teilschicht des oberen Protokolls.

14. Verfahren nach Anspruch 13, wobei die empfangenen Daten-Frames Daten-Frames in dem MAC-Modus auf Basis von Standards nach IEEE 802.15.3 umfassen.

15. Verfahren nach Anspruch 13 oder 14, wobei die empfangenen Daten-Frames in einem Modus entweder asynchroner oder isochroner Übertragung übertragen werden.

16. Verfahren nach Anspruch 13, wobei die Daten-Frames asynchrone Daten-Frames sind;

17. Verfahren nach Anspruch 13, wobei das Verfahren zum Empfangen von Multiprotokoll-Daten-Frames umfasst:
Empfangen isochroner Daten-Frames;
Bestimmen der Frame-Konvergenz-Teilschicht des oberen Protokolls, zu der die empfangenen isochronen Daten-Frames gesendet werden, als einen Stream-Index der empfangenen isochronen Daten-Frames; und
Senden der empfangenen isochronen Daten-Frames zu der bestimmten Schicht des oberen Protokolls.

18. Verfahren nach Anspruch 17, wobei der Stream-Index bestimmt wird, wenn ein Piconet-Koordinator (PNC) eine Kanalzeitzuweisung einer empfangenden Vorrichtung zulässt.

19. Verfahren nach Anspruch 18, das des Weiteren Senden einer Anforderungsanfrage zu einer sendenden Vorrichtung (500) umfasst, wenn ihr eine Kanalzeitzuweisung zum Senden der isochronen Daten-Frames zugeteilt wird, und das Empfangen einer Anforderungsantwort durch die Sendevorrichtung (500) in Reaktion auf die Anforderungsabfrage mit dem Stream-Index und den Abbildungsinformationen und der Frame-Konvergenz-Teilschicht umfasst, zu der die isochronen Daten-Frames gesendet werden.

20. Vorrichtung zum Empfangen von Multiprotokoll-Daten-Frames, die umfasst:
eine Vielzahl von Frame-Konvergenz-Teilschicht (FCSL)-Modulen, die die Protokolle unterstützen: und
ein FCSL-LLC-Modul (400), das so konfiguriert ist, dass es Daten-Frames empfängt, die über ein MAC-Modul (100) zu einem Drahtlos-Übertragungsmedium gesendet werden, und ein FCSL-Modul, zu dem die Daten-Frames gesendet werden, auf Basis von Identifizierungsinformationen bestimmt, die in den Daten-Frames enthalten sind, und die Daten-Frames zu dem bestimmten FCSL-Modul sendet.

21. Vorrichtung nach Anspruch 20, wobei das MAC-Modul auf Standards nach IEEE 802.15.3 basiert.

22. Vorrichtung nach Anspruch 20 oder 21, wobei die Daten-Frames asynchrone Daten-Frames umfassen und das FCSL-LLC-Modul (400) ein asynchrones Dienstzugangspunkt (SAP)-Trennungsmodul (420) umfasst, das so konfiguriert ist, dass es die enthaltenen Identifizierungsinformationen von den asynchronen Daten-Frames trennt, um zu bestimmen, ob sie der Frame-Konvergenz-Teilschicht entsprechen, zu der die asynchronen Daten-Frames gesendet werden sollen.

23. Vorrichtung nach Anspruch 20, 21 oder 22, wobei die Daten-Frames isochrone Daten-Frames umfassen und das FCSL-L LC-Modul (400) ein Stream-Index-Speichermodul (450) umfasst, das so konfiguriert ist, dass es darin Abbildungsinformationen zwischen der Frame-Konvergenz-Teilschicht und dem Stream-Index speichert, d. h. der Frame-Konvergenz-Teilschicht, zu der die isochronen Daten-Frames gesendet werden sollen.

24. Vorrichtung nach einem der Ansprüche 20 bis 23, wobei das FCSL-LLC-Modul des Weiteren ein Anforderungsabfrage-/Antwort-Modul (470) umfasst, das so konfiguriert ist, dass es dem Stream-Index-Speichermodul (450) erlaubt, eine Anforderungsabfrage zu empfangen, die Abbildungsinformationen zwischen dem Stream-Index und dem Frame-Konvergenz-Teilschicht enthalten und die Abbildungsinformationen darin zu speichern.

## Revendications

1. Procédé d'émission de trames de données multiprotocoles au moyen d'un contrôle d'accès au support MAC prédéterminé, comprenant :
(a) la réception de trames de données émises depuis une sous-couche de convergence de trame FCSL de protocole supérieure ;
(b) la fourniture des trames de données reçues avec des informations d'identification sur la FCSL de protocole supérieure ayant émis la trame de données ; et
(c) l'émission des trames de données comprenant les informations d'identification.

2. Procédé selon la revendication 1, dans lequel les trames de données sont émises dans le mode de MAC basé sur les normes IEEE 802.15.3.

3. Procédé selon la revendication 1 ou 2, dans lequel les trames de données sont transférées dans l'un ou l'autre des modes de transfert asynchrone ou isochrone.

4. Procédé selon la revendication 1, dans lequel les trames de données sont des trames de données asynchrones.

5. Procédé selon la revendication 1, dans lequel :
(a) les trames de données sont des trames de données isochrones ;
(b) les trames de données isochrones sont fournies avec un indice de flux mappé dans une sous-couche de convergence de trame FCSL ; et
(c) l'émission des trames de données isochrones se fait lors d'une attribution de temps de voie CTA de l'indice de flux fourni.

6. Procédé selon la revendication 5, dans lequel l'indice de flux mappé dans une FCSL ayant émis les données isochrones est obtenu avec la CTA provenant d'un coordinateur de picoréseau PNC.

7. Procédé selon la revendication 6, comprenant en outre l'envoi d'une réponse de sondage avec les informations de mappage de l'indice de flux une fois qu'une requête de sondage a été reçue en provenance d'un appareil de réception après la réception de la CTA.

8. Dispositif d'émission de trames de données multiprotocoles, comprenant :
une pluralité de modules de sous-couche de convergence de trame FCSL acceptant différents protocoles ;
un module de commande de liaison logique LLC de FCSL (400) configuré pour recevoir des trames de données provenant d'au moins un module parmi les modules FCSL et pour fournir les trames de données avec les informations d'identification de manière à permettre à un dispositif de réception (600) d'identifier la FCSL ayant émis les trames de données ; et
un module de contrôle d'accès au support MAC (100) configuré pour recevoir des trames de données provenant du module LLC de FCSL et pour émettre les trames de données vers un support d'émission sans fil.

9. Dispositif selon la revendication 8, dans lequel le module MAC est basé sur les normes IEEE 802.15.3.

10. Dispositif selon la revendication 8 ou 9, dans lequel les trames de données reçues comprennent des trames de données asynchrones, et le module LLC de FCSL (400) comprend un module de rattachement au point d'accès au service SAP asynchrone (410) configuré pour fournir les trames de données asynchrones avec les informations d'identification de manière à permettre au dispositif de réception (600) d'identifier la FCSL ayant émis les trames de données asynchrones.

11. Dispositif selon la revendication 8, 9 ou 10, dans lequel les trames de données reçues en provenance du module FCSL comprennent des trames de données isochrones, le module LLC de FCSL (400) comprend un module de mémorisation d'indice de flux (450) configuré pour la mémorisation dans celui-ci d'un indice de flux correspondant à la FCSL ayant émis les trames de données isochrones, et le module MAC (100) est configuré pour émettre les trames de données isochrones lors de l'attribution de la CTA pour avoir l'indice de flux mémorisé.

12. Dispositif selon la revendication 11, dans lequel le module LLC de FCSL (400) comprend en outre un module de requête/réponse de sondage (470) configuré pour répondre à une requête de sondage provenant du dispositif de réception (600), avec l'indice de flux correspondant à la FCSL ayant émis les trames de données isochrones, mémorisé dans le module de mémorisation d'indice de flux (450).

13. Procédé de réception de trames de données multiprotocoles, comprenant :
la réception de trames de données ;
la détermination d'une sous-couche de convergence de trame de protocole supérieure, FCSL, vers laquelle sont émises les trames de données reçues, sur la base d'informations d'identification comprises dans les trames de données reçues ; et
l'émission des trames de données reçues vers la FCSL de protocole supérieure déterminée.

14. Procédé selon la revendication 13, dans lequel les trames de données reçues comprennent des trames de données dans le mode de MAC basé sur les normes IEEE 802.15.3.

15. Procédé selon la revendication 13 ou 14, dans lequel les trames de données reçues sont transférées dans l'un ou l'autre des modes de transfert asynchrone ou isochrone.

16. Procédé selon la revendication 13, dans lequel les trames de données sont des trames de données asynchrones.

17. Procédé selon la revendication 13, dans lequel le procédé de réception des trames de données multiprotocoles comprend :
la réception de trames de données isochrones ;
la détermination que la FCSL de protocole supérieure vers laquelle sont émises les trames de données isochrones reçues correspond à un indice de flux des trames de données isochrones reçues ; et
l'émission des trames de données isochrones reçues vers la couche de protocole supérieure déterminée.

18. Procédé selon la revendication 17, dans lequel l'indice de flux est déterminé lorsqu'un coordinateur de picoréseau PNC autorise une CTA d'un dispositif de réception.

19. Procédé selon la revendication 18, comprenant en outre l'envoi d'une requête de sondage vers un dispositif d'émission (500) lorsqu'il se voit attribuer une CTA pour émettre les trames de données isochrones et la réception d'une réponse de sondage par le dispositif d'émission (500) en réponse à la requête de sondage, avec l'indice de flux et les informations de mappage de la FCSL vers laquelle les trames de données isochrones sont émises.

20. Dispositif de réception de trames de données multiprotocoles, comprenant ;
une pluralité de modules de sous-couche de convergence de trame FCSL acceptant les protocoles ; et
un module de commande de liaison logique LLC de FCSL (400) configuré pour recevoir des trames de données émises vers un support d'émission sans fil par l'intermédiaire d'un module MAC (100) et pour déterminer un module FCSL vers lequel les trames de données sont émises, sur la base d'informations d'identification comprises dans les trames de données, ainsi que pour émettre les trames de données vers le module FCSL déterminé.

21. Dispositif selon la revendication 20, dans lequel le module MAC est basé sur les normes IEEE 802.15.3.

22. Dispositif selon la revendication 20 ou 21, dans lequel les trames de données comprennent des trames de données asynchrones, et le module LLC de FCSL (400) comprend un module de séparation de point d'accès au service SAP asynchrone (420) configuré pour séparer les informations d'identification comprises dans les trames de données asynchrones de manière à vérifier si elles correspondent à la FCSL vers laquelle les trames de données asynchrones doivent être émises.

23. Dispositif selon la revendication 20, 21 ou 22, dans lequel les trames de données comprennent des trames de données isochrones et le module LLC de FCSL (400) comprend un module de mémorisation d'indice de flux (450) configuré pour la mémorisation dans celui-ci d'informations de mappage entre la FCSL et l'indice de flux, la FCSL étant celle vers laquelle les trames de données isochrones doivent être émises.

24. Dispositif selon l'une quelconque des revendications 20 à 23, dans lequel le module LLC de FCSL comprend en outre un module de requête/réponse de sondage (470) configuré pour permettre au module de mémorisation d'indice de flux (450) de recevoir une requête de sondage comprenant des informations de mappage entre l'indice de flux et la FCSL et pour mémoriser les informations de mappage.
